# EUROPEAN PATENT SPECIFICATION

(11) **EP 4 204 278 B1**
(45) Date of publication and mention of the grant of the patent: **10.09.2025**
(21) Application number: 21766138.8
(22) Date of filing: 18.08.2021
(51) Int. Cl.: B62B 3/00

(54) **STORAGE MEANS**
LAGERMITTEL
MOYEN DE STOCKAGE

(30) Priority: 28.08.2020 CH 10682020
(43) Date of publication of application: 05.07.2023
(73) Proprietor: Pick8Ship Technology AG, 8600 Dübendorf (CH)
(72) Inventor: HAID, Josef A., 8044 Gockhausen (CH)
(74) Representative: Rentsch Partner AG
(86) International application number: PCT/EP2021/072903
(87) International publication number: WO 2022/043150

(56) References cited:
- EP-A1- 0 429 825
- WO-A1-2004/050450
- US-A- 3 868 123
- US-A1- 2013 146 553

## Description

### FIELD OF THE INVENTION

The present invention is generally directed towards the field of storage means for receiving several receptacles and receptacles for storing and/or transporting goods.

### BACKGROUND OF THE INVENTION

From the prior art, storage means for receiving several receptacles for storing and/or transporting goods are known. These storage means usually comprise a horizontal base and two vertical and opposite side walls attached to the base. Some of these storage means, which are referred to as trolleys, additionally comprise rollers mounted to the base for easy transportation. Typically, L-shaped tracks protrude from the inward facing side of the two opposite side walls and extend horizontally along the respective side for receiving receptacles having various sizes, but a common width corresponding to the horizontal distance between the side walls. The overall construction of the storage means, while kept simple is to be done to allow a high packing density of receptacles of various sizes and a secure storing and/or transporting of the receptacles therein. Depending on the field of application varying sizes of the storage means can be required, in particular varying in the height of the storage means.

Several attempts are known from the prior art, briefly described hereinafter, which addressed the problems described above.

WO2004050450A1 published in 2004 in the name of Italfil Di Guerra Walter & CS relates to a trolley for storing and carrying goods. The described trolley comprises a base resting on wheels and the side of the trolley comprises at least one panel made of a plastic material. The panel is supported at the side by a pair of vertical uprights adapted for attaching into corresponding holes obtained in the trolley base.

WO2009008707A2 published in 2009 in the name of Aerocat relates to a trolley comprising a cabinet-shaped body comprising a bottom, an upper wall, and two side walls which enclose an interior, which are manufactured as an extrusion part from plastic. Each side wall of the body, on its inner surface facing the interior, is provided with a number of guide rails extending longitudinally above each other, for placing thereon trays or horizontal separation walls.

US3868123A published in 1975 in the name of Rubbermaid Commercial Products, Inc. relates to a wheeled open-ended rectangular vehicle with a plastic base having corner casters locked therein to corner posts extending upwardly therefrom, multiple plastic side wall sections superposed one upon another slidably mounted on said posts and having interior ribs for slidably supporting food receptacles, and a plastic quick-detachable cover mounted atop said posts.

EP0429825A1 published in 1991 in the name of Milcare Inc. relates to a utility cart with front, back, side, top and bottom walls includes a housing having a pair of U-shaped frames spanning the front and back portions of the cart. Each of the U-shaped frames has a pair of upright legs joined by a bottom bight portion. At least two side wall segments form opposite sides of the cart.

US2013146553A1 published in 2013 in the name of Effizient LLC relates to a retail cart for use in storing and stocking merchandise and, more particularly, to a mobile polymeric retail cart which is easily assembled and disassembled without the need for tools having opposing forces in its construction lending rigidity to the overall structure and a plurality of slideably received shelving units.

The disadvantages of the prior art are overcome by the invention as defined in the claims.

### SUMMARY OF THE INVENTION

The invention is directed to a storage means for receiving several receptacles for storing and/or transporting goods. The storage means comprises a base and two side walls arranged parallel to each other extending in an essentially vertical direction from the base. The side walls are at least partially made from vertically stacked segments. Two opposite segments each comprise at least one linear guiding means arranged at an inward facing side of the respective segment opposite to each other for receiving at least one of the receptacles in a sliding manner and supporting the received receptacle in the vertical direction. The opposite segments can be understood as being arranged opposite to each other at the two side walls at a similar position in the vertical direction. Usually multiple linear guiding means are arranged at an inward facing side of the respective segment opposite and parallel to each other.

Depending on the field of application the storage means may comprise a top interconnected to the side walls in the vertical direction opposite of the base, such that the side walls extend between the base and the top.

For a space saving construction the at least one linear guiding means are preferably a channel-like recess extending along the inward facing side of the respective segment. The linear guiding means may each comprise at least one supporting surface to support a thereto interconnected receptacle in the vertical direction. The at least one linear guiding means can be incorporated as a separate element or integrally formed with the inward facing side, however hybrid forms thereof are also possible. An example of such a hybrid form would be a linear guiding means partially formed by inward facing side of a segment and attached thereto are one or more separate elements, such as a guide rail made from a wear resistant material providing the support surface.

To increase the durability, a variation of at least one linear guiding means may comprise a channel-like insert. The channel-like insert can be arranged at least partially embedded in an elongated recess of the inward facing side of one of the segments. This variation is thinkable e.g. in case the segment is at least partially made from a lightweight but softer material, such as a sandwich material.

A secure storing and/or transporting of the receptacles can be achieved when the linear guiding means comprises at least one undercut to prevent, during operation, an inappropriate disengagement of an interconnected receptacle in a direction essentially perpendicular to the side walls, when a force is applied to the side wall in said direction. The at least one undercut prevents, during operation, an inappropriate disengagement of an interconnected receptacle in a direction essentially perpendicular to linear guiding means, when a force is applied to the side wall or the interconnected receptacle in said direction. This becomes in particular relevant when dynamic loads are occurring during the movement of the storage means while transportation. The at least one undercut comprises at least one stop surface extending in a sectional view at least partially in a vertical direction for engaging with a received receptacle, during operation in an interlocking manner. In a sectional view of the linear guiding means, the at least one undercut is preferably arranged adjacent and/or opposite to the at least one supporting surface. The sectional view can be understood as a cross-section in the vertical direction, perpendicular to the inward facing side of the respective segment. In some variations the at least one undercut comprises a bead extending at least partially in a vertical direction. The undercut may extend partially along the linear guiding means or along the linear guiding means in full.

Preferably the at least one linear guiding means has a cross-section that is one out of the following or a combination thereof: C-shaped, G-Shaped, V-shaped or T-shaped.

At least two neighboring vertically stacked segments can be interconnected by means of at least one out of the following: force-lock, form-lock, adhesive or welding or the like. Preferably each segment comprises a positive (male) connector and a corresponding negative (female) connector arranged at opposite end regions of the segment for engaging with the respective corresponding connector of the vertically neighboring segment in a form-locking manner. Good results are possible when the positive connector comprises at least one latching rib protruding along the end region of the segment. The latching rib may comprise at least one first latching bead protruding from the latching rib in a sectional view essentially perpendicular to the latching rib. The negative connector may comprise at least one second latching bead for engaging in the connected state with the respective first latching bead of the vertically neighboring segment in a form-locking manner.

Good sterilization properties of the storage means can be achieved when at least one adhesive layer is placed between at least two vertically stacked segments. Alternatively, or in addition at least one sealing element can be arranged between at least two vertically stacked segments. The at least one sealing element can be a sealing strip made from elastic material like rubber or silicone.

The storage means according to the disclosure is insertable for the purpose of transporting the storage means into a transporting means. The transporting means usually has similar shape as the storage means to allow for a space saving accommodation of the storage means. Depending on the design the transporting means can be a cabinet-shaped container with thereto attached rollers. For an easy insertion of the storage means into the transporting means, the transporting means may comprise at least on retractable ramp, connecting in the extended state the ground and the inside of the transporting means.

In a variation of the storage means according to the disclosure the vertically stacked segments are incorporated in a single segment.

Preferably at least one of the segments is profile-shaped with a regular cross-section. However, depending on the application at least one segment may comprise at least one reinforcing element expanding essentially perpendicular to the insertion direction of the receptacles. The reinforcing element can be arranged internally or externally with respect to the segment. In some variations the reinforcing element can be formed as beam-like strud arranged within the segment and connecting two sides of the segment.

For a rigid and lightweight construction, at least one of the segments is preferably made from a continuously extruded profile, such as an extruded metal profile, in particular an extruded aluminium profile. However, at least one segment can also be at least partially made from plastic, sandwich material, wood, metal, aluminium or steel, or a combination thereof.

An easy operation of the storage means can be achieved when the guiding means comprise an inlet funnel at their entry region to lead a receptacle to be received in to the guiding means. Preferably the inlet funnels per side wall are incorporated into an inlet upright mounted along at least one of the side walls interconnecting the segments.

In order to increase the lateral stability, the storage means may comprise at least one stiffening frame interconnecting the base and the two side. The stiffening frame can be made from sections of flat steel welded together. The stiffening frame can in a sectional view have at least one out of the following: U-shape or O-shape.

For a good integrability into a system for storing and/or transporting goods comprising multiple storage means, an indicator element can be arranged adjacent to each inlet funnel, said indicator element is configured to receive from a computer system via a communication network indicator information and to display the received indicator information. This allows during operation to indicate the linear guiding means destined to receive a specific receptacle by means of the indicator element arranged at the entry region of the linear guiding means. Preferably the indicator element is an optical indicator element, such as an LED (Light Emitting Diode) or the like. The computer system can be a local or a remote computer system such as a cloud computer system. The communication network is preferably a wireless and/or mobile communication network. Favorably multiple indicator elements indicate the vertical position of the receptacle to be received, wherein the vertical distance between the indicator elements indicating the vertical position corresponds to the height of the receptacle to be received in the vertical direction.

In another preferred variation, the disclosure is directed to a receptacle for storing and/or transporting goods in a storage means as described above, wherein the receptacle comprises supporting means arranged at least on two opposite sides of the receptacle to interconnect to two linear guiding means of the storage means during operation and to support the receptacle in a vertical direction.

In another preferred variation the disclosure is directed to a receptacle for storing and/or transporting goods in a storage means as described above, wherein the receptacle comprises supporting means arranged at least on two opposite sides of the receptacle to interconnect with two linear guiding means of the storage means during operation and to support the receptacle in a vertical direction. Furthermore, the receptacle comprises securing means arranged in the region of the supporting means to interlock with the undercut of the storage means during operation to prevent an inappropriate disengagement of the supporting means and the linear guiding means in a direction essentially perpendicular to the side walls when a force is applied to the side wall in said direction. Preferably the securing means prevent an inappropriate disengagement of the supporting means and the linear guiding means in a direction essentially perpendicular to the linear guiding means.

The supporting means of the receptacle generally protrude from the respective side of the receptacle. This allows a minimal distance between the side walls of the storage means and the sides of the receptacle during operation and therefore increases the packing density.

Good results are possible when the securing means are incorporated into the supporting means formed as at least one out of the following or as combination thereof: L-shaped profile, sliding nuts, T-shaped sliding bolts rollers or the like.

Depending on the field of application, the receptacles can be at least one out of the following: a tray, an (expandable) box, a cage, a net with frame or the like. Each receptacle having a common spatial extension, in particular a common width, generally equal to the distance between the parallel side walls of the storage means.

In another preferred variation the disclosure is directed to a kit of parts comprising at least one storage means as described above and at least one receptacle for storing and/or transporting goods in the at least one storage means.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: a first variation of a storage means and a first variation of a receptacle according to the disclosure in a perspective view;
- Fig. 2: a detailed view of Fig. 1 indicated by Q;
- Fig. 3: an exploded view of the first variation of the storage means of Fig. 1;
- Fig. 4: a detailed view of Fig. 3 indicated by B; and
- Fig. 5: a detailed view of Fig. 4 indicated by C.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

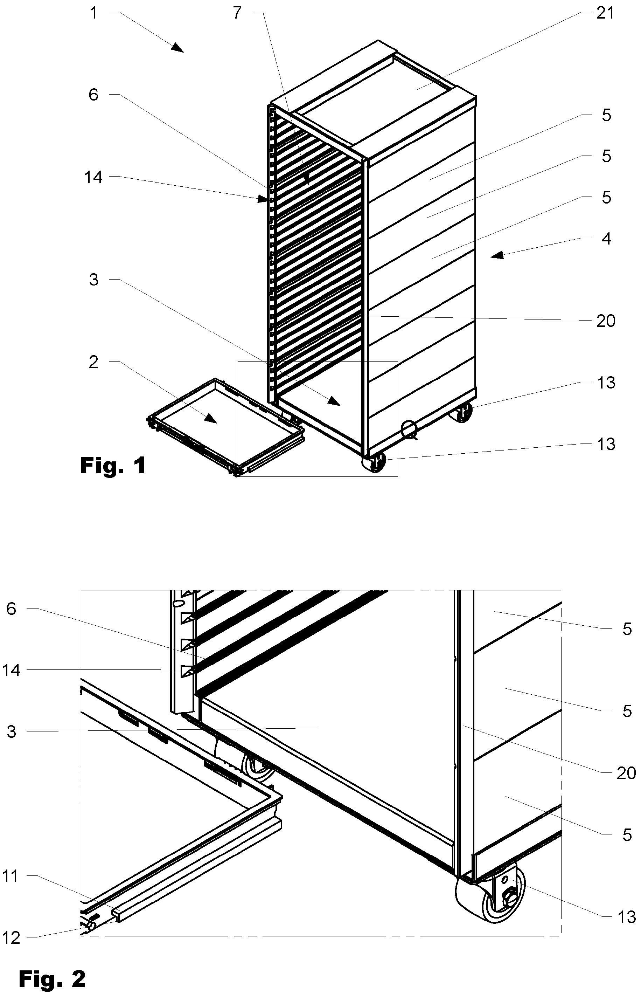

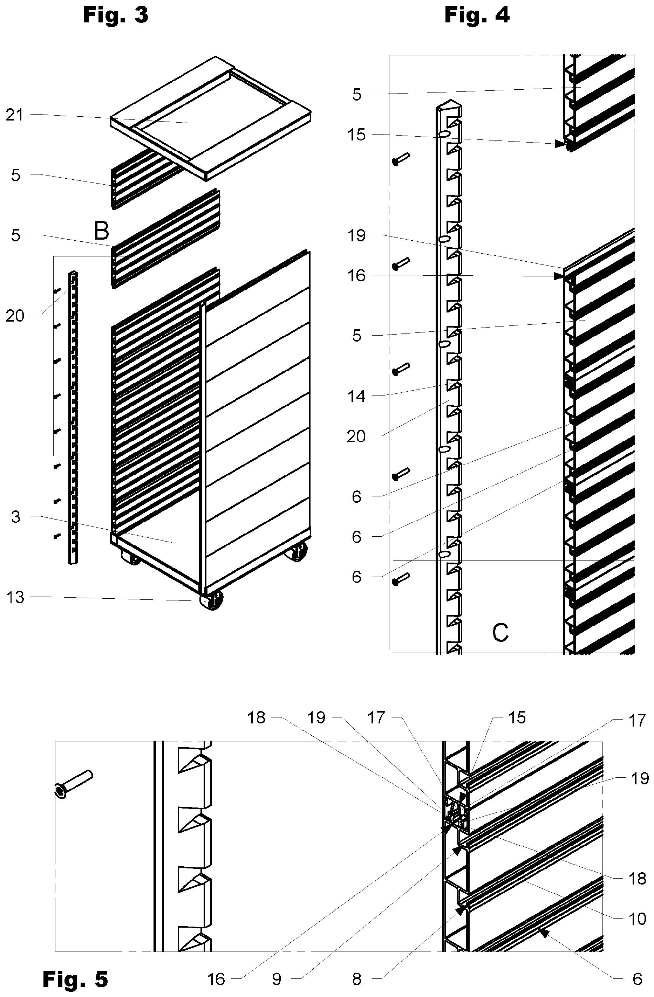

**Figure 1** shows a first variation of a storage means 1 and a first variation of a receptacle 2 in a perspective view according to the disclosure and **Figure 2** shows a detailed view of **Figure 1** indicated by Q. **Figure 3** displays an exploded view of the first variation of the storage means of **Figure 1** and **Figure 4** shows a detailed view of **Figure 3** indicated by B. **Figure** 5 shows a detailed view of **Figure 4** indicated by C.

The shown first variation of the storage means 1 for receiving several receptacles 2 for storing and/or transporting goods comprises a base 3 and two side walls 4 arranged parallel to each other extending in an essentially vertical direction from the base 3. The side walls 4 are made from vertically stacked segments 5. Two opposite segments 5 each comprise at least one linear guiding means 6 arranged at an inward facing side 7 of the respective segment 5 opposite to each other for receiving at least one of the receptacles 2 in a sliding manner and supporting the received receptacle 2 in the vertical direction. In the shown first variation of the storage means 1 as best visible in **Figure 4** each segment 5 has four parallel linear guiding means 6 arranged at an inward facing side 7 of the respective segment 5.

As shown in **Figures 1** and **3****,** the storage means 1 comprises a top 21 interconnected to the side walls 4 opposite of the base 3, such that the side walls 4 extend between the base 3 and the top 21.

It can be seen in **Figure 5** that the linear guiding means 6 of the first variation are channel-like recesses extending along the inward facing side 7 of the segments 5.

The linear guiding means 6 each comprise a supporting surface 9 to support a during operation thereto interconnected receptacle 2 (not shown) in the vertical direction. The supporting surface 9 extends in a horizontal plane along the segments 5.

**Figure 5** shows furthermore that the linear guiding means 6 each comprise an undercut 8 to prevent, during operation, an inappropriate disengagement of an interconnected receptacle 2 in a direction essentially perpendicular to the side walls 4, when a force is applied to the side wall 4 in said direction.

The undercut 8 comprises a stop surface arranged on a bead 10 extending in a sectional view in a vertical direction to engage during operation with a received receptacle 2 in an interlocking manner. The undercut 8 is arranged adjacent to the respective supporting surface 9. As further indicated in **Figure 5** the linear guiding means 6 each have a G-Shaped cross-section.

**Figure 5** shows that neighboring vertically stacked segments 5 are interconnected by means of force-lock. In **Figure 4** it can be seen that each segment 5 comprises a positive (male) connector 15 and a corresponding negative (female) connector 16 arranged at opposite end regions of the segment for engaging with the respective connector 15, 16 of the vertically neighboring segment 5 in a force- and/or form-locking manner. The positive connector 15 comprises two latching ribs 17 protruding along the respective end region of the segment, as shown in **Figure 5****.** Each latching rib 17 comprises a first latching bead 18 protruding in a sectional view of the latching rip 17 at least partially perpendicular to latching rib 17. The negative connector comprises two corresponding second latching beads 19 for engaging with the respective first latching bead 18 of the vertically neighboring segment 5 in a form-locking manner.

The segments 5 of the shown first variation are respectively made from an extruded aluminium profile, as best visible in **Figure 5****.**

**Figure 2** shows an inlet upright 20 attached to an end face of the respective sidewall 4 using screws or bolts. Each inlet upright 20 comprises an inlet funnel 14 per linear guiding means 6. The inlet funnels 14 are aligned with the entry region of the respective linear guiding means 6 to lead a receptacle 2 to be received in to the guiding means.

**Figures 1** and **2** show additionally a first variation of a receptacle 2 according to the disclosure. The shown receptacle 2 comprises supporting means 11 arranged at least on two opposite sides of the receptacle 2 to interconnect with two linear guiding means 6 of the storage means 1 during operation and to support the receptacle 2 in a vertical direction.

Furthermore, the receptacle 2 comprises securing means 12 arranged in the region of the supporting means 11 to interlock with the undercut 8 of the storage means 1 during operation to prevent an inappropriate disengagement of the supporting means 11 and the linear guiding means 6 in a direction essentially perpendicular to the side walls 4 when a force is applied to the side wall 4 in said direction. In the first variation the securing means 12 are incorporated into the supporting means 11 formed as an L-shaped profile. During operation the L-shaped profile engages with the supporting surface 9 and the undercut 8 of the respective linear guiding means 6.

Rather, the words used in the description are words of description rather than limitation, and it is understood that various changes may be made without departing from the scope of the invention as defined by the claims.

### LIST OF DESIGNATIONS

- 1: Storage means
- 2: Receptacle
- 3: Base
- 4: Side wall
- 5: Segment (side wall)
- 6: Linear guiding means
- 7: Side (inward facing side of segment)
- 8: Undercut (linear guiding means)
- 9: Supporting surface (linear guiding means)
- 10: Bead (undercut)
- 11: Supporting means (receptacle)
- 12: Securing means (receptacle)
- 13: Rollers
- 14: Inlet funnel
- 15: Positive (male) connector (segment)
- 16: Negative (female) connector (segment)
- 17: Latching rib (positive connector)
- 18: First latching bead (positive connector)
- 19: Second latching bead (negative connector)
- 20: Inlet upright
- 21: Top

## Claims

1. A storage means (1) for receiving several receptacles (2) for storing and/or transporting goods, the storage means (1) comprising:
a. a base (3) and
b. two side walls (4) arranged parallel to each other extending in an essentially vertical direction from the base (3), wherein
c. the side walls (4) are at least partially made from vertically stacked segments (5) and wherein
d. two opposite segments (5) each comprising at least one linear guiding means (6) arranged at an inward facing side (7) of the respective segment (5) opposite to each other for receiving at least one of the receptacles in a sliding manner and supporting the received receptacle (2) in the vertical direction,
**characterized in that,**
e. the linear guiding means (6) comprises at least one undercut (8) to prevent, during operation, an inappropriate disengagement of an interconnected receptacle (2) in a direction essentially perpendicular to the side walls, in particular in a direction essentially perpendicular to linear guiding means, when a force is applied to the side wall in said direction, wherein the at least one undercut (8) comprises a stop surface extending in a sectional view at least partially in a vertical direction for engaging with the received receptacle during operation in an interlocking manner.

2. The storage means (1) according to claim 1, **wherein** the at least one linear guiding means (6) is a channel-like recess extending along the inward facing side (7) of the respective segment (5).

3. The storage means (1) according to at least one of the previous claims, **wherein** the linear guiding means (6) each comprise at least one supporting surface (9) to support a thereto interconnected receptacle in the vertical direction.

4. The storage means (1) according to claim 3, **wherein** in a sectional view of the linear guiding means, the at least one undercut is arranged adjacent and/or opposite to the at least one supporting surface (9).

5. The storage means (1) according claim 4, **wherein** the at least one undercut (8) comprises a bead (10) and a stop surface extending in a sectional view at least partially in a vertical direction for engaging with the received receptacle during operation in an interlocking manner.

6. The storage means (1) according to at least one of the previous claims, **wherein** the vertically stacked segments (5) are incorporated in a single segment (5).

7. The storage means (1) according to at least one of the previous claims, **wherein** at least one of the segments (5) is made from a continuously extruded profile, such as an extruded metal profile, in particular an extruded aluminium profile, or is at least partially made from plastic or wood.

8. The storage means (1) according to at least one of the previous claims, **wherein** the linear guiding means (6) comprise an inlet funnel (14) at their entry region to lead a receptacle (2) to be received in to the linear guiding means (6).

9. The storage means (1) according to claim 8, **wherein** an indicator element is arranged adjacent to each inlet funnel (14) , said indicator element is configured to receive from a computer system via a communication network indicator information and to display the received indicator information for indicating during operation the linear guiding means destined to receive a specific receptacle by means of the indicator element arranged at the entry region of the linear guiding means.

10. The storage means (1) according to at least one of the previous claims, **wherein** the storage means (1) comprises at least one stiffening frame interconnecting the base (3) and the two side walls (4) to increase lateral stability, in particular wherein the storage means (1) comprises a top interconnected to the side walls (4) in the vertical direction opposite of the base such that the side walls (4) extend between the base and the top.

11. A kit of parts comprising the storage means according to at least one of the claims 1 to 10 and the receptacle (2) for storing and/or transporting goods in the storage means (1), **wherein** the receptacle (2) comprises supporting means (11) arranged at least on two opposite sides of the receptacle (2) to interconnect with two linear guiding means (6) of the storage means (1) during operation and to support the receptacle (2) in a vertical direction.

12. The kit of parts according to claim 11, **wherein** the receptacle (2) further comprises
a. securing means (12) arranged in the region of the supporting means (11) to interlock with an undercut (8) of the linear guiding means of the storage means (1) during operation to prevent an inappropriate disengagement of the supporting means (11) and the linear guiding means (6) in a direction essentially perpendicular to the side walls, in particular in a direction essentially perpendicular to the linear guiding means (6), when a force is applied to the side wall in said direction.

13. The kit of parts according to claim 12, **wherein** the securing means (12) are incorporated into the supporting means (11) formed as at least one out of the following or as combination thereof: L-shaped profile, sliding nuts, T-shaped sliding bolts or rollers.

14. The kit of parts according to at least one of the claims 11 to 13, **wherein** in the storage means (1) of claim 9 multiple indicator elements indicate a vertical position of the receptacle to be received, wherein a vertical distance between the indicator elements indicating the vertical position corresponds to a height of the receptacle to be received in the vertical direction.

15. The kit of parts according to least one of the claims 11 to 14, wherein the receptacles are at least one out of the following: a tray, an expandable box, a cage, a net with frame; with each receptacle having a common spatial extension, in particular a common width, which is generally equal to the distance between the parallel side walls of the storage means.

## Patentansprüche

1. Lagermittel (1) zum Aufnehmen mehrerer Behälter (2) zum Lagern und/oder Transportieren von Gütern, wobei das Lagermittel (1) umfasst:
a. eine Basis (3) und
b. zwei parallel zueinander angeordnete Seitenwände (4), die sich in einer im Wesentlichen vertikalen Richtung von der Basis (3) erstrecken, wobei
c. die Seitenwände (4) zumindest teilweise aus vertikal gestapelten Segmenten (5) gebildet sind und wobei
d. zwei gegenüberliegende Segmente (5) jeweils mindestens ein an einer gegenüberliegenden, nach innen weisenden Seite (7) des jeweiligen Segments (5) angeordnetes lineares Führungsmittel (6) zum gleitenden Empfangen mindestens eines der Behälter und zum Abstützen des empfangenen Behälters (2) in vertikaler Richtung umfassen,
**dadurch gekennzeichnet, dass**
e. die linearen Führungsmittel (6) mindestens eine Hinterschneidung (8) aufweisen, um im Betrieb ein ungewolltes Lösen eines wirkverbundenen Behälters (2) in einer Richtung im Wesentlichen senkrecht zu den Seitenwänden, insbesondere in einer Richtung im Wesentlichen senkrecht zu linearen Führungsmitteln, wenn eine Kraft auf die Seitenwand in dieser Richtung wirkt, zu verhindern, wobei die mindestens eine Hinterschneidung (8) eine Anschlagsfläche umfasst, die sich in einer Schnittansicht zumindest teilweise in vertikaler Richtung erstreckt, um im Betrieb mit dem empfangenen Behälter formschlüssig in Eingriff zu kommen.

2. Lagermittel (1) nach Anspruch 1, **dadurch gekennzeichnet, dass** das mindestens eine lineare Führungsmittel (6) eine sich entlang der nach innen weisenden Seite (7) des jeweiligen Segments (5) erstreckende kanalartige Ausnehmung ist.

3. Lagermittel (1) nach mindestens einem der vorstehenden Ansprüche, **dadurch gekennzeichnet, dass** die linearen Führungsmittel (6) jeweils mindestens eine Auflagefläche (9) zum Abstützen eines mit ihnen wirkverbundenen Aufnahmemittels in vertikaler Richtung umfassen.

4. Lagermittel (1) gemäss Anspruch 3, wobei in einer Schnittansicht der linearen Führungsmittel die mindestens eine Hinterschneidung angrenzend und/oder gegenüber der mindestens einen Auflagefläche (9) angeordnet ist.

5. Lagermittel (1) gemäss Anspruch 4, wobei die mindestens eine Hinterschneidung (8) einen Wulst (10) und eine sich in einer Schnittansicht zumindest teilweise in vertikaler Richtung erstreckende Anschlagfläche umfasst, um im Betrieb mit dem empfangenen Behälter formschlüssig in Eingriff zu kommen.

6. Lagermittel (1) nach mindestens einem der vorstehenden Ansprüche, wobei die vertikal gestapelten Segmente (5) in einem einzigen Segment (5) zusammengefasst sind.

7. Lagermittel (1) nach mindestens einem der vorstehenden Ansprüche, wobei mindestens eines der Segmente (5) aus einem durchgehend extrudierten Profil, wie einem extrudierten Metallprofil, insbesondere einem extrudierten Aluminiumprofil, oder zumindest teilweise aus Kunststoff oder Holz gebildet ist.

8. Lagermittel (1) nach mindestens einem der vorstehenden Ansprüche, wobei die linearen Führungsmittel (6) an ihrem Eintrittsbereich einen Einlauftrichter (14) umfassen, um einen in die linearen Führungsmittel (6) aufzunehmen Behälter (2) zu führen.

9. Lagermittel (1) gemäss Anspruch 8, wobei ein Anzeigeelement angrenzend an jeden Einlauftrichter (14) angeordnet ist, wobei das Anzeigeelement eingerichtet ist, von einem Computersystem über ein Kommunikationsnetzwerk Anzeigeinformationen zu empfangen und die empfangenen Anzeigeinformationen anzuzeigen, um während des Betriebs die linearen Führungsmittel, die dazu bestimmt sind, einen spezifischen Behälter aufzunehmen, mittels des Anzeigeelements anzuzeigen, das am Eintrittsbereich der linearen Führungsmittel angeordnet ist.

10. Lagermittel (1) gemäss mindestens einem der vorhergehenden Ansprüche, wobei die Lagermittel (1) mindestens einen Versteifungsrahmen umfassen, der die Basis (3) und die beiden Seitenwände (4) miteinander verbindet, um die seitliche Stabilität zu erhöhen, insbesondere wobei die Lagermittel (1) eine Oberseite umfassen, die mit den Seitenwänden (4) in vertikaler Richtung gegenüber der Basis verbunden ist, so dass sich die Seitenwände (4) zwischen der Basis und der Oberseite erstrecken.

11. Teilesatz umfassend die Lagermittel gemäss mindestens einem der Ansprüche 1 bis 10 und den Behälter (2) zum Lagern und/oder Transportieren von Gütern in den Lagermitteln (1), wobei der Behälter (2) zumindest an zwei gegenüberliegenden Seiten des Behälters (2) angeordnete Tragmittel (11) umfasst, um im Betrieb mit zwei linearen Führungsmitteln (6) der Lagermittel (1) in Wirkverbindung zu treten und den Behälter (2) in vertikaler Richtung zu tragen.

12. Teilesatz gemäss Anspruch 11, wobei der Behälter (2) ferner folgendes umfasst
a. Sicherungsmittel (12), die im Bereich der Tragmittel (11) angeordnet sind, um mit einer Hinterschneidung (8) der linearen Führungsmittel der Lagermittel (1) während des Betriebs ineinanderzugreifen, um ein unpassendes Lösen der Tragmittel (11) und der linearen Führungsmittel (6) in einer Richtung im Wesentlichen senkrecht zu den Seitenwänden, insbesondere in einer Richtung im Wesentlichen senkrecht zu den linearen Führungsmitteln (6), zu verhindern, wenn eine Kraft auf die Seitenwand in dieser Richtung ausgeübt wird.

13. Teilesatz gemäss Anspruch 12, wobei die Sicherungsmittel (12) in die Tragmittel (11) integriert sind, die als mindestens eines der folgenden oder als Kombination davon ausgebildet sind: L-förmiges Profil, Gleitmuttern, T-förmige Gleitbolzen oder Rollen.

14. Teilesatz gemäss mindestens einem der Ansprüche 11 bis 13, wobei in dem Lagermittel (1) gemäss Anspruch 9 mehrere Anzeigeelemente eine vertikale Position des zu empfangenden Behälters anzeigen, wobei ein vertikaler Abstand zwischen den Anzeigeelementen, die die vertikale Position anzeigen, einer Höhe des zu empfangenden Behälters in vertikaler Richtung entspricht.

15. Teilesatz gemäss mindestens einem der Ansprüche 11 bis 14, wobei es sich bei den Aufnahmen um mindestens eine der folgenden handelt: ein Tablett, eine erweiterbare Box, einen Käfig, ein Netz mit Rahmen; wobei jede Aufnahme eine gemeinsame räumliche Erstreckung, insbesondere eine gemeinsame Breite, aufweist, die im Allgemeinen dem Abstand zwischen den parallelen Seitenwänden des Lagermittels entspricht.

## Revendications

1. Moyen de stockage (1) destiné à recevoir plusieurs récipients (2) pour stocker et/ou transporter des marchandises, le moyen de stockage (1) comprenant:
a. une embase (3) et
b. deux parois latérales (4) disposées parallèlement l'une à l'autre et s'étendant dans une direction essentiellement verticale à partir de l'embase (3), dans laquelle
c. les parois latérales (4) sont au moins partiellement constituées de segments (5) empilés verticalement et dans laquelle
d. deux segments (5) opposés comprenant chacun au moins un moyen de guidage linéaire (6) disposé sur un côté (7) tourné vers l'intérieur du segment (5) respectif opposé l'un à l'autre pour recevoir au moins l'un des récipients de manière coulissante et pour supporter le récipient (2) reçu dans la direction verticale,
**caractérisé en ce que,**
e. le moyen de guidage linéaire (6) comprend au moins une contre-dépouille (8) pour empêcher, pendant le fonctionnement, un dégagement inapproprié d'un récipient (2) interconnecté dans une direction essentiellement perpendiculaire aux parois latérales, en particulier dans une direction essentiellement perpendiculaire aux moyens de guidage linéaires, lorsqu'une force est appliquée à la paroi latérale dans ladite direction, dans laquelle la au moins une contre-dépouille (8) comprend une surface d'arrêt s'étendant dans une vue en coupe au moins partiellement dans une direction verticale pour s'engager avec le récipient reçu pendant le fonctionnement de manière à se verrouiller.

2. Moyen de stockage (1) selon la revendication 1, dans lequel le au moins un moyen de guidage linéaire (6) est un évidement en forme de canal s'étendant le long du côté (7) tourné vers l'intérieur du segment (5) respectif.

3. Moyen de stockage (1) selon au moins l'une des revendications précédentes, dans lequel les moyens de guidage linéaires (6) comprennent chacun au moins une surface d'appui (9) pour supporter un récipient interconnecté avec ceux-ci dans la direction verticale.

4. Moyen de stockage (1) selon la revendication 3, dans lequel, dans une vue en coupe des moyens de guidage linéaires, la au moins une contre-dépouille est arrangée de manière adjacente et/ou opposée à la au moins une surface d'appui (9).

5. Moyen de stockage (1) selon la revendication 4, dans lequel la au moins une contre-dépouille (8) comprend un bourrelet (10) et une surface d'arrêt s'étendant dans une vue en coupe au moins partiellement dans une direction verticale pour s'engager avec le récipient reçu pendant le fonctionnement de manière à se verrouiller.

6. Moyen de stockage (1) selon au moins l'une des revendications précédentes, dans lequel les segments (5) empilés verticalement sont incorporés dans un seul segment (5).

7. Moyen de stockage (1) selon au moins l'une des revendications précédentes, dans lequel au moins l'un des segments (5) est constitué d'un profilé extrudé en continu, tel qu'un profilé métallique extrudé, en particulier un profilé en aluminium extrudé, ou est au moins partiellement constitué de matière plastique ou de bois.

8. Moyen de stockage (1) selon au moins l'une des revendications précédentes, dans lequel les moyens de guidage linéaire (6) comprennent un entonnoir d'entrée (14) dans leur zone d'entrée pour guider un récipient (2) à recevoir dans les moyens de guidage linéaire (6).

9. Moyen de stockage (1) selon la revendication 8, dans lequel un élément indicateur est arrangé de manière adjacente à chaque entonnoir d'entrée (14), ledit élément indicateur étant configuré pour recevoir d'un système informatique via un réseau de communication des informations d'indication et pour afficher les informations d'indication reçues afin d'indiquer pendant le fonctionnement les moyens de guidage linéaires destinés à recevoir un récipient spécifique au moyen de l'élément indicateur arrangé dans la région d'entrée des moyens de guidage linéaires.

10. Moyen de stockage (1) selon au moins l'une des revendications précédentes, dans lequel le moyen de stockage (1) comprend au moins un cadre de renfort reliant l'embase (3) et les deux parois latérales (4) pour augmenter la stabilité latérale, en particulier dans lequel le moyen de stockage (1) comprend un plateau supérieur relié aux parois latérales (4) dans la direction verticale opposée à l'embase de telle sorte que les parois latérales (4) s'étendent entre l'embase et le plateau supérieur.

11. Ensemble de pièces comprenant le moyen de stockage selon au moins l'une des revendications 1 à 10 et le récipient (2) pour stocker et/ou transporter des marchandises dans le moyen de stockage (1), dans laquelle le récipient (2) comprend des moyens de support (11) arrangés au moins sur deux côtés opposés du récipient (2) pour s'interconnecter avec deux moyens de guidage linéaires (6) du moyen de stockage (1) pendant le fonctionnement et pour supporter le récipient (2) dans une direction verticale.

12. Ensemble de pièces selon la revendication 11, dans lequel le récipient (2) comprend en outre
a. des moyens de fixation (12) arrangés dans la région des moyens de support (11) pour s'engager avec une contre-dépouille (8) des moyens de guidage linéaire des moyens de stockage (1) pendant le fonctionnement afin d'empêcher un désengagement inapproprié des moyens de support (11) et des moyens de guidage linéaire (6) dans une direction essentiellement perpendiculaire aux parois latérales, en particulier dans une direction essentiellement perpendiculaire aux moyens de guidage linéaires (6), lorsqu'une force est appliquée à la paroi latérale dans ladite direction.

13. Ensemble de pièces selon la revendication 12, dans lequel les moyens de fixation (12) sont incorporés dans les moyens de support (11) formés comme au moins un des éléments suivants ou comme une combinaison de ceux-ci : profilé en L, écrous coulissants, boulons coulissants en T ou rouleaux.

14. Ensemble de pièces selon au moins l'une des revendications 11 à 13, dans lequel, dans le moyen de stockage (1) de la revendication 9, plusieurs éléments indicateurs indiquent une position verticale du récipient à recevoir, dans lequel une distance verticale entre les éléments indicateurs indiquant la position verticale correspond à une hauteur du récipient à recevoir dans la direction verticale.

15. Ensemble de pièces selon au moins l'une des revendications 11 à 14, dans lequel les récipients sont au moins l'un des éléments suivants : un plateau, une boîte extensible, une cage, un filet avec cadre ; chaque récipient ayant une extension spatiale commune, en particulier une largeur commune, qui est généralement égale à la distance entre les parois latérales parallèles du moyen de stockage.
